# NEUE EUROPÄISCHE PATENTSCHRIFT

(11) **EP 0 669 774 B2**
(45) Veröffentlichungstag und Bekanntmachung des Hinweises auf die Entscheidung über den Einspruch: **07.02.2007**
(45) Hinweis auf die Patenterteilung: 13.10.1999
(21) Anmeldenummer: 94250044.8
(22) Anmeldetag: 23.02.1994
(51) Int. Cl.: H04Q 7/32

(54) **Teilnehmersystem für digitale Telefonnetze, insbesondere Mobilfunknetze**
Subscriber system for digital telephone networks, especially mobile radio networks
Système d'abonné pour réseaux téléphoniques numériques, en particulier réseaux radio mobile

(43) Veröffentlichungstag der Anmeldung: 30.08.1995
(73) Patentinhaber: Vodafone Holding GmbH, 40213 Düsseldorf (DE)
(72) Erfinder: Joussen, Fritz, D-47058 Duisburg (DE)
(74) Vertreter: Meissner, Peter E.

(56) Entgegenhaltungen:
- WO-A-92/19078
- WO-A-94/08433
- SMART CARD 2000. SELECTED PAPERS FROM THE SECOND INTERNATIONAL SMART CARD 2000 CONFERENCE, 1991, AMSTERDAM (NL) Seiten 93 - 107 A.J. FARRUGIA AND AL 'Smart Card technology Applied to the future European Cellular Telephone on the digital D-Network'

## Beschreibung

Die Erfindung betrifft ein Teilnehmersystem für digitale Telefonnetze.

Digitale Mobilfunknetze sind aufgrund einer Norm gestaltet und erstellt, z.B. folgt das GSM-Netz Global System for Mobile Communications) einer solchen Norm. Der Zugang zu einem Mobilfunknetz setzt eine Teilnehmerkarte (SIM-Karte = Subscriber Identity Module) voraus, die im Telefonendgerät eingeschoben wird und ohne die das Telefonendgerät nicht benutzt werden kann, die Teilnehmerkarte (SIM) enthält persönliche Daten des Teilnehmers, wie z.B. die IMSI (International Mobile Subscriber Identification), das "Heimat"-Netz und Angaben über die für den Teilnehmer verfügbaren Dienste. Die SIM-Karte besitzt außerdem einen Speicher, der häufig benutzte Telefonnumern umfaßt. Diese Teilnehmerkarte ist außerdem durch eine vier- bis achtstellige persönliche Kennummer (PIN = Personal Identity Number) geschützt. Diese und andere Informationen sind auf dem SIM-Chip abgelegt. Dieser hat im wesentlichen vier Funktionsbereiche: Die CPU (Central Proccessing Unit), das ROM (Read Only Memory), das RAM (Random Access Memory), das EE-Prom (Electrically Erasable Programmable Read Only Memory). Dieses EE-Prom ist mit einer begrenzten Speicherkapazität ausgestattet und bildet einen flüchtig programmierbaren Speicherbaustein. Dieser enthält alle nutzerrelevanten und individuellen Informationen, wie z.B. die IMSI, die PIN (oder eine Super-PIN), die internationale Zugangsberechtigung, die Prioritätsklasse sowie Teilnehmerinformationen.

Die IMSI (International Mobile Subscriber Identification) identifiziert jeden SIM-Chip eindeutig. Sobald ein Teilnehmer mit seiner Teilnehmerkarte sein Telefon einschaltet und ein Gespräch führt, wird über die IMSI festgestellt, ob er ordnungsgemäß aktiviert ist und welche Zusatzdienste er benutzen kann. Nach erfolgreicher Authentisierung wird das gewählte Gespräch durchgeschaltet. Versucht ein Teilnehmer hingegen, mit einer nicht auf seine Person identifizierbaren Karte zu telefonieren, kommt das Gespräch nicht zustande.

Alle IMSI's der im Mobilfunknetz gemeldeten Kunden werden in den Heimatregistern (HLR = Home Location Register) geführt. Dort sind sie zusammen mit den zugehörigen MSISDNs, den eigentlichen Telefonnummern, abgelegt. Die Korrelation von IMSI und MSISDN erfolgt bei der Freischaltung der Teilnehmerkarte.

Die HLRs sind oft dezentral über ein Land verteilt, um ein Mobilfunknetz nicht durch überflüssigen Signalisierungsverkehr zu belasten. Jeder Teilnehmer ist dann in das HLR eingetragen, in dessen zugewiesener Region er sich am häufigsten aufhält. Diese regionale HLR-Zuweisung vermeidet daher Netzüberlastung und Verzögerung beim Verbindungsaufbau.

Die erwähnte SIM-Karte kann als Teilnehmerkarte in ihren äußeren Abmessungen auf das jeweils verwendete Telefonendgerät abgestimmt sein, wobei die SIM-Karte in zwei Ausführungsformen, eine große Karte und ein Plugin, in Benutzung ist. Die große Karte stellt einen Träger mit den Abmessungen 85,6 x 55 mm dar, und das Plugin ist nur wenig größer als der Chip selbst. Diese beiden Kartengrößen werden nach internationalern Standard zugelassen.

Es ist auch schon vorgeschlagen worden (WO 92/19078), für zwei unterschiedliche Abrechnungssysteme zwei Teilnehmerkarten in einem Kartenkörper vorzusehen, der vom Teilnehmer wechselweise in das Telefonendgerät eingebracht wird. Es ist allerdings anzumerken, daß das bekannte System ein besonderes Ziel verfolgt, nämlich geschäftliche und private Telefonrechnungen durch zwei entsprechend auf einer Karte angeordnete Chips zu trennen, eine Lösung, die letztendlich auf das betreffende Steuersystem eines Landes abzielt. Dadurch entsteht ein manueller Aufwand beim Umstecken der Karte, und es ist nicht gesichert, daß in jedem Fall das richtige Abrechnungssystem ausgewählt wird. Für ankommende Verbindungen ist es möglich, daß der Angerufene einen Teil der anfallenden Gesprächsgebühren trägt. Welchem Abrechnungssystem die Gebühren zugeschrieben werden, bestimmt der Nutzer durch Einschub der entsprechenden Kartenseite. In der Regel weiß er nicht, ob dann geschäftliche oder private Gespräche ankommen. Das System der zwei Karten in einem Kartenträger ist außerdem mit einem erheblichen Aufwand bei der Freischaltung verbunden, weil für jede der Karten eine getrennte IMSI-Nummer vergeben werden muß. Es ist daher bei zwei Karten erforderlich, für die Freischaltung eine logische Verknüpfung durchzuführen und damit erhebliche Änderungen im Administrationssystem vorzunehmen.

Aus der Veröffentlichung "smart card 2000-selectet papers from the second international smart card 2000 conference", 1991, Amsterdam (NL), Seiten 93-107, A. J. Farrugia and AL "Smart Card Technology applied to the future European cellular telephone on the digital D-Network" erläutert detailliert Aufbau und Möglichkeiten von SIM-Karten mit jeweils unterschiedlicher IMSI.

Demgegenüber ist der vorliegenden Erfindung die Aufgabe zugrundegelegt, eine erhöhte Nutzungsmöglichkeit für den Mobilfunk-Kunden zu schaffen, ohne auf der Seite des Kunden eine komplizierte Handhabung zu benötigen.

Die gestellte Aufgabe wird bei dem eingangs bezeichneten Teilnehmersystem erfindungsgemäß durch den Gegenstand des unabhängigen Anspruchs gelöst. Die Vorteile dieses Systems sind ein geringer Änderungsaufwand im Administrations- und Abrechnungswesen, eine optimale Nutzung der knappen Vorräte zur Verfügung stehender IMSI's und MSISDN's, keine zusätzliche Hardware in der Netzinfrastruktur und kein zusätzlicher Administrationsaufwand. Es ist auch nicht möglich, daß der Teilnehmer einer Verwechslung zum Opfer fällt, da vorausgesetzt wird, daß der Teilnehmer mit mehreren gleichen Teilnehmerkarten entweder ein einzelnes Endgerät unter Bevorratung einer Ersatz-Teilnehmerkarte betreibt oder aber mehrere Telefonendgeräte, und zwar dann von verschiedenen Orten. Hierbei spielt keine Rolle, daß durch mehrere Teilnehmerkarten mehrere Abrechnungsvorgänge auf nur eine Rechnung registriert werden, da dies vom Teilnehmer in dieser Weise gewünscht wird.

Nach einer weiteren Verbesserung ist vorgesehen, daß während deckungsgleicher Zeiteinheiten nur eine von mehreren Teilnehmerkarten in das Mobilfunknetz einbuchbar ist. Weder findet ein gegenseitiges Abhören von zwei Telefonendgeräten statt, noch können gleichzeitige Gespräche nicht ordnungsgemäß registriert werden.

Die wirtschaftliche Herstellung von zwei Teilnehmerkarten mit absolut gleicher IMSI, der eine einzige MSISDN (Freischaltung) zugeordnet wird, ist sodann dadurch gewährleistet, daß von zwei Teilnehmerkarten eine einen Original-Chip und die andere einen von dem Original-Chip gefertigten Clone-Chip enthält. Der Clone-Chip kann daher freigeschaltet werden, sobald der Teilnehmer eine Ersatz-Teilnehmerkarte wünscht oder aber ein oder mehrere zusätzliche Telefonendgeräte beschafft, die er von verschiedenen Orten aus zu betreiben wünscht.

Es ist daher vorteilhaft, daß der Original-Chip und der Clone-Chip jeweils einem getrennten Telefonendgerät zugeordnet sind.

Die Einführung des erfindungsgemäßen Teilnehmersystems wird außerdem dadurch begünstigt, daß zur Herstellung der Teilnehmerkarte ein gewünschtes Logo und ein gewünschtes Mobilfunknetz-HLR als sog. Vorpersonalisierung angegeben ist und daß erst beim Fertigungsprozeß der Teilnehmerkarte die Seriennummer und die technischen Parameter (die internationale Zugangsberechtigung, die Anzahl der Kurzwahlnummernspeicher, die Anzahl der Kurznachrichtenplätze u.dgl.) hinzugefügt werden. Dadurch ist es möglich, auch nachträglich bei Hinzufügung eines weiteren Telefonendgerätes den nach dem Original-Chip gefertigten Clone-Chip als Ersatz einzusetzen oder für ein zweites Telefonendgerät zu verwenden, da die Freischaltung dieses Clone-Chips lediglich in der Zuordnung einer im Abrechnungssystem vorgesehenen Nummer, der MSISDN- Nummer besteht.

Es ist daher vorteilhaft, daß nach Beendigung des Herstellungsprozesses eines Original-Chips oder eines Clone-Chips die einer Teilnehmerkarte entsprechenden Seriennummern abschließend im Mobilfunknetz freischaltbar sind.

Die Verwaltung paarweise hergestellter und gelieferter Original- bzw. Clone-Chips ist ferner dadurch vorteilhaft, daß die beiden SIM-Karten, die in Teilnehmerkarten unterschiedlicher Abmessungen verwendbar sind, paarweise oder gruppenweise lagerbar sind.

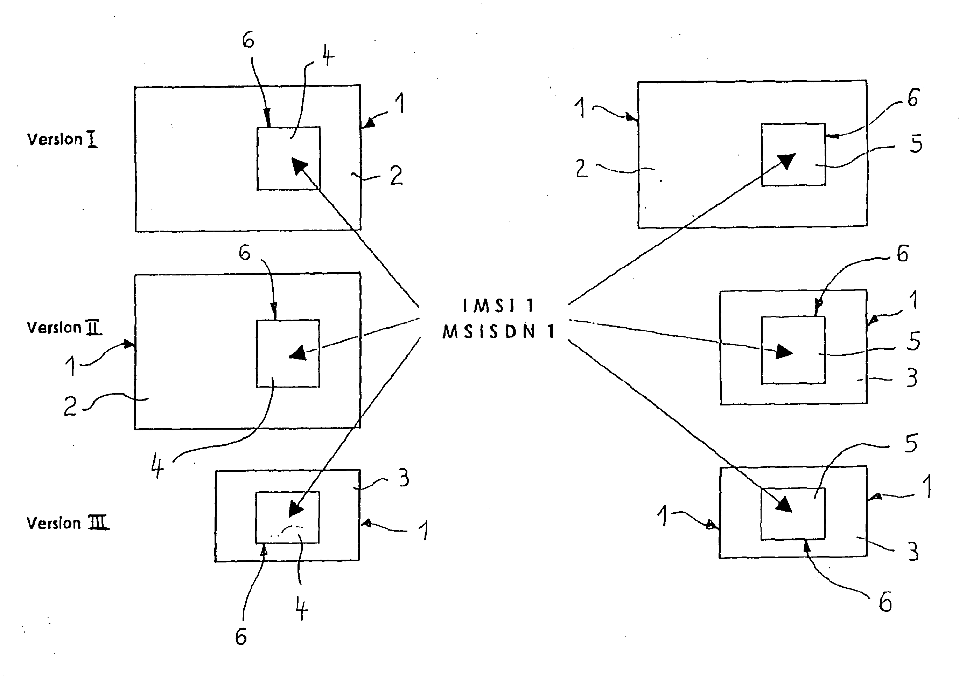

Ein Ausführungsbeispiel der Erfindung ist in der Zeichnung dargestellt und wird im folgenden näher beschrieben.

Die einzige Figur der Zeichnung zeigt eine Teilnehmerkarte in drei verschiedenen Versionen:
Eine Version I, in der oberen Reihe bestehend aus zwei identischen großen Teilnehmerkarten,
eine Version II mit einer großen und einer kleinen Teilnehmerkarte und Version III mit zwei kleinen Teilnehmerkarten, sog. Plugin.

Das Teilnehmersystem für digitale Telefonnetze setzt die erwähnten Teilnehmerkarten 1 voraus, die den Zutritt zu dem Mobilfunknetz gestatten. In einem Telefonendgerät kann je nach Ausführungsform eine große Teilnehmerkarte 2 oder eine Plugin 3 erforderlich sein. In der Version I (obere Zeichnungsreihe) sind zwei große Teilnehmerkarten 2, in der Version II (mittlere Zeichnungsreihe) eine große Teilnehmerkarte und eine Miniteilnehmerkarte 3 und in der Version III zwei Miniteilnehmerkarten 3 gepaart. Alle Versionen I bis III enthalten denselben SIM-Chip bzw. dieselbe IMSI 1. Bei der Freischaltung wird ihnen dieselbe MSISDN 1 (= Mobile Station Integrated Services for Digital Network Number) zugeordnet.

In der Version I ist ein Original-Chip 4 und ein identischer Clone-Chip 5 eingesetzt. Beide, der Original-Chip 4 und der Clone-Chip 5 stellen eine SIM-Karte 6 dar, die sowohl in der großen Teilnehmerkarte 2 als auch in der Miniteilnehmerkarte 3 verwendbar sind, wobei in allen Versionen gleiche SIM-Karten 6 als Plugin oder als entsprechend gefertigte Karte einsetzbar sind.

Alle Versionen I bis III können jeweils als Ersatz-Teilnehmerkarten 1 oder als Teilnehmerkarten 1 für örtlich entfernte Telefonendgeräte eingesetzt werden.

Zur Herstellung der Teilnehmerkarte 1 wird jeweils ein gewünschtes Logo und ein Mobilfunknetz-HLR (als sog. Vorpersonalisierung) angegeben, und erst beim Fertigungsprozeß der Teilnehmerkarte 1 werden die Seriennummer und die technischen Parameter, wie z.B. die internationale Zugangsberechtigung, die Anzahl der Kurzwahlnummernspeicher, die Anzahl der Kurznachrichtenplätze u.dgl. hinzugefügt.

Nach Beendigung des Herstellungsprozesses eines Original-Chips 4 oder eines Clone-Chips 5 werden die einer Teilnehmerkarte 1 entsprechenden Seriennummern abschließend im Mobilfunknetz zugeordnet und damit freigeschaltet. Die beiden SIM-Karten 6, die in Teilnehmerkarten 1 unterschiedlicher Abmessungen verwendbar sind, werden paarweise oder gruppenweise gelagert, um den Kundenwünschen zu entsprechen.

### Bezugszeichenliste

- 1: Teilnehmerkarte
- 2: große Teilnehmerkarte
- 3: Plugin
- 4: Original-Chip
- 5: Clone-Chip
- 6: SIM-Karte

## Patentansprüche

1. Teilnehmersystem für digitale Telefonnetze, zu denen die Teilnehmer mittels Teilnehmerkarten von jedem netzsystemkonformen Telefon aus Zugriff erlangen, wobei eine Teilnehmerkarte in ihren äußeren Abmessungen **dadurch** auf verwendbare Telefonendgeräte abgestimmt ist, dass ihre Kartengröße einem internationalen Standard entspricht,
wobei in jeder Teilnehmerkarte ein SIM-Chip enthalten ist,
und in dem System zwei oder mehr als zwei Teilnehmerkarten (1) mit absolut gleichem Subscriber Identity Module SIM-Chip aktivierbar sind, welche (1) exakt die gleiche International Mobile Subscriber Identification IMSI aufweisen und wobei während deckungsgleicher Zeiteinheiten der zwei oder mehr als zwei Teilnehmerkarten nur eine von mehreren Teilnehmerkarten (1) mit identischem Chip in das digitale Telefonnetz einbuchbar ist.

2. Teilnehmersystem nach Anspruch 1,
**dadurch gekennzeichnet,**
**dass** von zwei Teilnehmerkarten (1) die eine einen SIM-Chip in Form eines Original-Chips (4) und die andere einen von dem Original-Chip (4) gefertigten Clone-Chip (5) enthält.

3. Teilnehmersystem nach einem der Ansprüche 1 bis 2,
**dadurch gekennzeichnet,**
**dass** die technischen Merkmale auf der Teilnehmerkarte (1) die internationale Zugangsberechtigung und/oder die Anzahl der Kurzwahlnummernspeicher und/oder die Anzahl der Kurznachrichtenplätze umfassen.

4. Teilnehmersystem nach einem der Ansprüche 1 bis 3,
**dadurch gekennzeichnet,**
**dass** für einen Original-Chip (4) oder einen hiervon kopierten Clone-Chip (5) die einer Teilnehmerkarte (1) entsprechenden Seriennummern abschließend im Mobilfunknetz freischaltbar sind.

5. Teilnehmersystem nach einem der vorhergehenden Ansprüche,
**dadurch gekennzeichnet,**
**dass** es ein digitales Telefonnetz in Form eines Mobilfunknetzes enthält.

## Claims

1. A subscriber system for digital telephone networks, to which the subscribers gain access from any telephone which conforms to the network system by means of subscriber cards, wherein a subscriber card is conformed in its external dimensions to telephone terminals which may be used in that its card size corresponds to an international standard,
wherein a SIM chip is contained in each subscriber card, and in the system two or more than two subscriber cards (1) may be activated with absolutely the same Subscriber Identity Module (SIM) chip, which (1) comprise exactly the same International Mobile Subscriber Identification (IMSI) and wherein, during coinciding time units of the two or more than two subscriber cards, only one of several subscriber cards (1) with identical chips may be entered into the digital telephone network.

2. A subscriber system according to claim 1, **characterised in that**, where there are two subscriber cards (1), one contains a SIM chip in the form of an original chip (4) and the other contains a clone chip (5) produced from the original chip (4).

3. A subscriber system according to one of claims 1 to 2, **characterised in that** the technical features on the subscriber card (1) include the international access authorisation and/or the number of quick dial number memory slots and/or the number of short message slots.

4. A subscriber system according to one of claims 1 to 3, **characterised in that** the serial numbers corresponding to one subscriber card (1) for an original chip (4) or a clone chip (5) copied therefrom may finally be enabled in the mobile radio network.

5. A subscriber system according to one of the preceding claims, **characterised in that** it contains a digital telephone network in the form of a mobile radio network.

## Revendications

1. Système d'abonné pour des réseaux téléphoniques numériques, auxquels les abonnés ont accès au moyen de cartes d'abonné à partir de tout téléphone conforme au système du réseau, une carte d'abonné étant adaptée, concernant ses dimensions externes, aux appareils téléphoniques utilisables, en ce que sa taille correspond à un standard international,
système dans lequel une puce SIM est contenue dans chaque carte d'abonné, et, dans le système, deux cartes d'abonné (1) ou plus peuvent être activées avec absolument la même puce SIM (Subscriber Identity Module), lesquelles (1) présentent exactement la même IMSI (International Mobile Subscriber Identification) et dans lequel, pendant des unités de temps coïncidentes des deux, ou plus, cartes d'abonné, uniquement une de la pluralité des cartes d'abonné (1) avec une puce identique peut être prise en compte dans le réseau téléphonique numérique.

2. Système d'abonné selon la revendication 1,
**caractérisé en ce que**, de deux cartes d'abonné (1), l'une contient une puce SIM sous forme d'une puce originale (4) et l'autre une puce clone (5) fabriquée à partir de la puce originale (4).

3. Système d'abonné selon une des revendications 1 ou 2,
**caractérisé en ce que** les caractéristiques techniques de la carte d'abonné (1) comportent l'autorisation d'accès internationale et/ou le nombre des mémoires de numéros de sélection abrégée et/ou le nombre des emplacements de messages abrégés.

4. Système d'abonné selon une des revendications 1 à 3,
**caractérisé en ce que**, pour une puce originale (4) ou une puce clone (5) copiée à partir de celle-ci, les numéros de série correspondant à une carte d'abonné (1) sont librement commutables de façon verrouillable dans le réseau radio mobile.

5. Système d'abonné selon une des revendications précédentes,
**caractérisé en ce qu'**il contient un réseau téléphonique numérique sous forme d'un réseau radio mobile.
